Europäisches Patentamt

European Patent Office

Office européen des brevets

(19)

(11) **EP 0 521 782 B2**

(12) # NOUVEAU FASCICULE DE BREVET EUROPEEN

(45) Date de publication et mention de la décision concernant l'opposition:
**22.04.1998 Bulletin 1998/17**

(51) Int Cl.6: **F16K 11/074**

(45) Mention de la délivrance du brevet:
**05.04.1995 Bulletin 1995/14**

(21) Numéro de dépôt: **92401875.7**

(22) Date de dépôt: **01.07.1992**

(54) **Couple de disques céramiques pour robinet mitigeur et robinet mitigeur le comportant**

Ein Paar keramischer Scheiben für eine Mischbatterie und eine dieses enthaltende Mischbatterie

Pair of ceramic discs for a mixing valve and a mixing valve comprising the same

(84) Etats contractants désignés:
**CH DE DK ES GB IT LI PT SE**

(30) Priorité: **04.07.1991 FR 9108393**

(43) Date de publication de la demande:
**07.01.1993 Bulletin 1993/01**

(73) Titulaire: **NORTON DESMARQUEST FINE CERAMICS**
**92400 Courbevoie (FR)**

(72) Inventeur: **Gougouyan, Yves**
**F-75015 Paris (FR)**

(74) Mandataire: **Rinuy, Santarelli**
**14, avenue de la Grande Armée**
**75017 Paris (FR)**

(56) Documents cités:
**DE-A- 3 309 339**          **FR-A- 2 574 894**
**FR-A- 2 590 643**

Remarques:
Le dossier contient des informations techniques présentées postérieurement au dépôt de la demande et ne figurant pas dans le présent fascicule.

**Description**

L'invention concerne la géométrie des surfaces de contact des disques céramiques qui coulissent l'un sur l'autre dans un robinet mitigeur.

Ainsi qu'on le sait, un robinet mitigeur comporte. à l'intérieur d'un corps extérieur, une enceinte interne, couramment appelée cartouche, dont une face est constituée par un disque fixe en céramique raccordé de façon étanche à trois conduits : deux conduits d'arrivée d'eau, froide et chaude respectivement, et un conduit d'évacuation d'eau à température intermédiaire. Le long de ce disque fixe coulisse, en translation et en rotation, un disque mobile de plus petite taille commandé en mouvement par un mécanisme de cartouche, en fonction de l'orientation d'un levier d'actionnement extérieur mis à la disposition d'un utilisateur.

Le disque fixe comporte deux orifices, ou lumières, d'alimentation rapprochés, raccordés respectivement aux conduits d'arrivée, et un orifice ou lumière d'évacuation raccordé au conduit d'évacuation, ce disque ayant une géométrie symétrique par rapport à un plan de symétrie qui coupe ce disque entre les orifices d'alimentation et au travers de l'orifice d'évacuation. Le disque mobile quant à lui comporte en pratique une ouverture oblongue, le plus souvent conformée en "huit" ou en entrée de serrure. Il admet lui aussi un plan de symétrie. Le débattement en translation de ce disque mobile le long du disque fixe, lorsque les plans de symétrie sont confondus, est tel que l'ouverture oblongue du disque mobile puisse n'intercepter que le seul orifice d'évacuation, ou au contraire recouvrir également, pour des parts égales, les deux orifices d'alimentation. En outre, une rotation de ce disque mobile, sur un angle couramment de l'ordre de ± 60°, permet de faire que l'ouverture oblongue intercepte l'orifice d'évacuation et des parties d'aires différentes des orifices d'alimentation, voire un seul de ces orifices lorsque l'on veut de l'eau, soit entièrement chaude, soit entièrement froide. Un tel robinet mitigeur est connu du document FR-A-25 74 894.

Le plus grand soin est en pratique mis à assurer une complète étanchéité entre les surfaces en contact des disques, tout en maintenant un frottement modéré limitant les efforts de manoeuvre sur le levier extérieur à un niveau régulier et modéré.

Mais les robinets mitigeurs à disques céramiques présentent deux inconvénients principaux :

- durcissement de l'effort de manoeuvre au cours du vieillissement.
- risque de blocage du mécanisme en cas d'arrêt prolongé (ce phénomène en fait aléatoire conduit à des couples de manoeuvre qui deviennent erratiques).

Les solutions envisagées et/ou utilisées à ce jour pour pallier ces défauts sont de deux types :

- l'utilisation d'un film de graisse entre les deux plaquettes, ou
- la diminution des surfaces de contact de ces plaquettes.

Il est évident que d'autres problèmes de frottement interviennent à l'intérieur du mécanisme de la cartouche, mais ces problèmes ne sont pas visés par l'invention et ne seront pas développés ici.

Le graissage est généralement réalisé à l'aide d'une graisse silicone (hydrophobe) en couche de 1 à 5 μm d'épaisseur environ. Cette couche de graisse présente plusieurs inconvénients :

- elle est instable et a tendance à s'éliminer par raclage, lavage ou écrasement, pendant le fonctionnement du robinet.
- sa viscosité étant fonction de la température. le couple de manoeuvre n'est pas constant ; de plus, l'élimination du film de graisse est accélérée dans la zone de passage de l'eau chaude,
- le film de graisse sert de piège à toutes sortes d'impuretés présentes dans l'eau (calcaire notamment) ; ces impuretés forment des boues d'encrassement qui peuvent perturber, voire annuler, les propriétés lubrifiantes de la graisse.
- la graisse (particulièrement le savon qui la constitue) est un produit mal défini et susceptible de réagir avec l'eau,
- le film de graisse, quand il devient trop mince, joue le rôle inverse de celui espéré et peut participer au durcissement du couple de manoeuvre,
- la destruction (réaction avec le milieu ambiant, oxydation ...) de la graisse peut être à l'origine des blocages décrits précédemment, avec formation d'une sorte de "colle".

Pour ce qui est des réductions des surfaces portantes (c'est-à-dire en contact), la solution la plus utilisée consiste à supprimer le disque mobile et à le remplacer par des pièces cylindriques s'appuyant par leurs tranches sur le second disque qui assure la stabilité du système. Ceci sous-entend un mécanisme spécifique, imposant la géométrie du robinet. De plus, il se pose très souvent un problème de guidage des pièces cylindriques pour les maintenir en appui sur le disque. Ceci se traduit par un déséquilibre et donc par une usure prématurée du mécanisme. Ce mécanisme peut toutefois fonctionner sans graisse.

Une seconde solution est largement utilisée en étant généralement associée à un graissage de sécurité. Elle consiste à dégager la périphérie de l'un des deux disques (généralement le disque fixe) de façon à limiter sur ce disque l'interface de contact avec l'autre disque à la zone située à l'intérieur d'un cercle légèrement plus grand que celui interceptant les trois lumières d'arrivée d'eau chaude, d'arrivée d'eau froide et d'évacuation d'eau ménagées dans ce disque.

Mais cette solution a pour inconvénient de maintenir la nécessité d'un graissage (avec les inconvénients précités, d'autant que le débordement de la pièce mobile par rapport à la surface de contact de la pièce fixe génère un effet de racloir accélérant l'élimination de la graisse.

En fait, pour échapper aux inconvénients précités, la tendance est actuellement de rechercher de nouveaux matériaux pour la constitution des disques.

L'invention a pour objet de pallier les inconvénients précités avec des matériaux classiques mais sans nécessiter la présence de graisse, en permettant la conservation d'un couple de manoeuvre régulier au cours du temps et sans induire d'usure ou de vieillissement prématuré.

On connait déjà, de façon générale, un couple de disques céramiques pour robinet mitigeur, comportant un disque fixe destiné à être fixe par rapport à ce robinet, et un disque mobile de plus petite taille que le disque fixe et destiné à glisser sur ce disque fixe en translation et en rotation à l'intérieur d'un débattement donné, ce disque fixe comportant sur une face une surface portante destinée à être affrontée au disque mobile et étant traversé par deux lumières d'alimentation et par une lumière d'évacuation d'eau, destinées à être raccordées de façon étanche à l'opposé de la surface portante à deux conduits d'arrivée d'eau chaude et froide, et à un conduit de sortie d'eau à température intermédiaire, ces lumières d'alimentation étant situées de part et d'autre d'un plan de référence perpendiculaire à ce disque fixe et traversant la lumière d'évacuation, ce disque mobile comportant une surface d'appui adaptée à être pressée de façon étanche sur la surface portante du disque fixe, dans cette surface d'appui débouchant un évidement oblong adapté, selon la position du disque mobile le long du disque fixe, à n'intercepter que la lumière d'évacuation en une position dite fermée ou à intercepter cette lumière d'évacuation et l'une et/ou l'autre, au moins partiellement, des lumières d'alimentation, cette surface d'appui du disque mobile étant continue depuis ledit évidement jusqu'à un bord périphérique de ce disque mobile, la surface portante du disque fixe comportant un liseré principal fermé s'étendant autour des trois lumières et d'au moins une dépression ménagée dans ladite face sur une partie seulement de l'épaisseur de ce disque fixe, la surface d'appui du disque mobile venant, en toute position relative vis à vis du disque fixe, en appui sur ce liseré tout autour de cette dépression, cette surface portante comportant en outre un lisere interne isolant, en position fermée du disque mobile la lumière d'évacuation vis à vis des lumières d'alimentation.

Selon l'invention, un couple de disques du type précité est caractérisé en ce que la surface portante du disque fixe comporte en outre un liseré interne secondaire entourant la lumière d'évacuation.

Ainsi on crée un ou plusieurs évidements à la surface du disque fixe dans la zone comprise à l'intérieur du cercle interceptant les trois lumières de passage d'eau. Il en résulte, comme avantage principal, une diminution très importante ($\geqq$ 50 % en pratique) de la surface portante du disque fixe, ce qui favorise l'évacuation des débris, réduit notablement les risques de blocage et, lorsqu'un blocage/collage apparaît, minimise les efforts nécessaires au déblocage : les risques de rupture lors des éventuels blocages sont ainsi quasi-nuls. On maintient toutefois une étanchéité propre à éviter toute fuite vers la périphérie des disques.

Ces liserés internes combinés au liseré principal ont pour avantage la création d'une réserve d'eau permettant la lubrification des disques sans graissage ; cette réserve peut être prévue totalement étanche en position fermée du robinet, l'eau contenue ne peut s'évaporer et permet d'éviter le séchage des plaques et les phénomènes de collage qui en résultent. En fait, les liserés autour des lumières d'alimentation assurent l'isolation des entrées chaude et froide, tandis que le liseré autour de la lumière d'évacuation suffit pour l'emprisonnement d'une quantité d'eau.

Selon des dispositions préférées de l'invention éventuellement combinées :

- ce liseré interne s'étend autour de chaque lumière d'alimentation,
- ce liseré interne est contigü au liseré principal,
- le bord périphérique de la surface d'appui du disque mobile est inscrit dans un cercle de diamètre $\underline{d}$, le débattement du disque mobile le long du disque fixe est au moins approximativement une surface de diamètre $\underline{D}$, et le liseré principal est circulaire, avec un diamètre interne $\varnothing$ satisfaisant les inégalités :

$$d_1 \leqq \varnothing < 2\,d - D$$

où $d_1$ est le diamètre du plus petit cercle contenant les trois lumières d'alimentation et d'évacuation,
- le diamètre $\underline{D}$ est le diamètre du disque fixe,
- le liseré principal a un diamètre valant de l'ordre de $(d_1 + 1,5\ mm)$,
- le liseré principal a une largeur valant entre 2 et 15 % de la longueur moyenne du disque fixe,
- ce liseré principal a une largeur d'au moins 0,6 mm, de préférence au moins 0,75mm.
- cette surface portante comporte éventuellement des nervures en saillie latéralement vers l'extérieur du liseré principal,
- cette dépression ménagée dans le disque fixe est unique.
- cette dépression a une profondeur comprise entre 0,3 et 1,5 mm, et au plus égale à 25 % de l'épaisseur de ce disque fixe (en fait la limite supérieure de ce pourcentage est imposée par la faisabilité industrielle et est de l'ordre de 25 %),
- ledit plan de symétrie constitue un plan de symétrie pour le disque fixe,
- l'évidement ménagé dans le disque mobile le traverse sur une partie seulement de son épaisseur.

Des objets, caractéristiques et avantages de l'invention ressortent de la description qui suit, donnée à titre d'exemple non limitatif, en regard des dessins annexés sur lesquels :

-   la figure 1 est une vue en coupe diamétrale d'un empilement des disques des figures 2 et 3, coupés selon les lignes de coupe I-I de ces figures,
-   la figure 2 est une vue de dessus du disque fixe de l'empilement de la figure 1, les hachures désignant la surface portante contre laquelle le disque mobile est appliqué,
-   la figure 3 est une vue de dessous du disque mobile de l'empilement de la figure 1,
-   la figure 4 est une vue de dessus de l'empilement des disques de la figure 1 en une position empêchant toute circulation d'eau, la zone en grisé représentant la surface d'appui par laquelle le disque mobile est en appui sur le disque mobile,
-   la figure 5 est une autre vue de cet empilement, en une position correspondant à un mélange en proportions sensiblement égales des débits d'eau incidents,
-   la figure 6 est encore une autre vue de cet empilement, en une position correspondant à un mélange en proportions très différentes des débits d'eau incidents,
-   la figure 7 est une vue de dessus, très schématique, d'un disque fixe de forme rectangulaire, et
-   la figure 8 est une vue de dessous d'un disque mobile de forme rectangulaire associable au disque fixe de la figure 7.

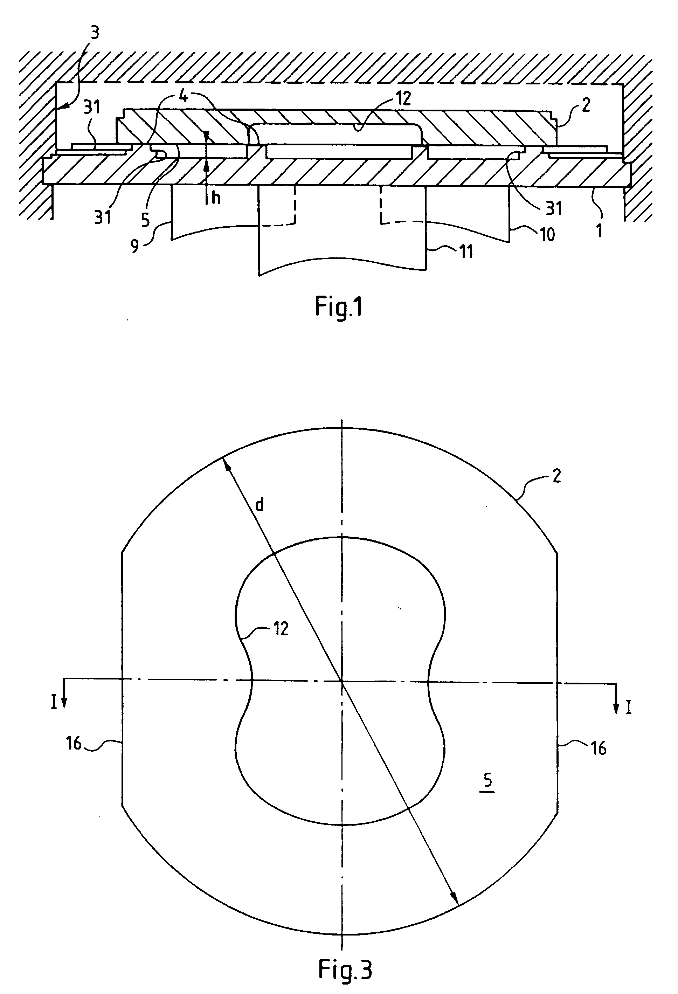

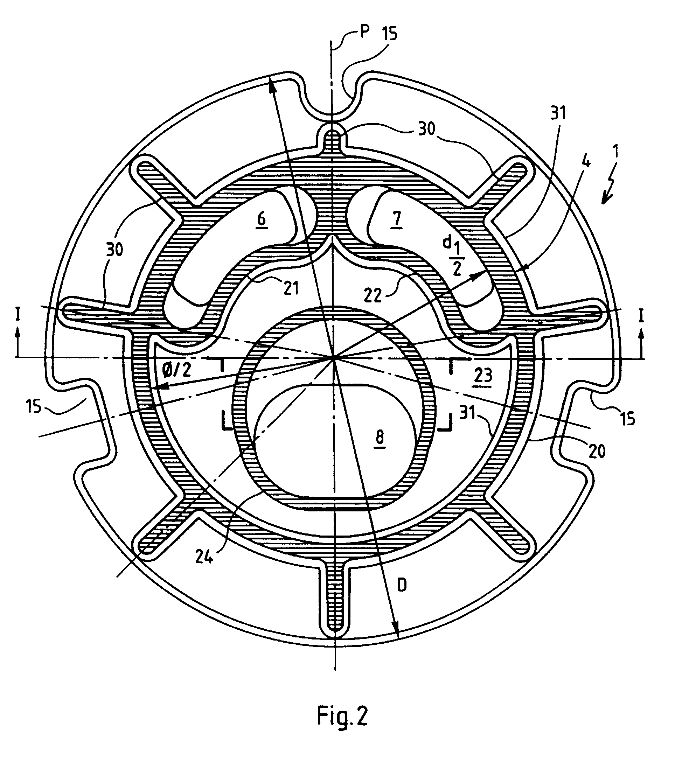

La figure 1 représente un couple de disques céramiques 1 et 2, ici sensiblement circulaires, destinés à être incorporés à un disque mitigeur dont seule l'enceinte intérieure, ou cartouche, est représentée de façon très schématique, sous la référence 3.

L'un, 1, de ces disques est destiné à être fixe par rapport à ce robinet tandis que l'autre disque repéré 2, de plus petite taille que le disque fixe, est destiné à glisser sur ce disque fixe, en translation et en rotation autour d'un axe parallèle à un axe de référence perpendiculaire aux disques. Les mouvements du disque mobile le long du disque fixe seront confinés à l'intérieur d'un espace de débattement en pratique déterminé par la section du disque fixe.

Le disque fixe 1 (figure 2) comporte sur une face, une surface portante 4 destinée à être affrontée au disque mobile 2.

Le disque mobile 2 (figure 3) comporte à cet effet une surface d'appui 5 adaptée à être pressée par tout moyen connu approprié (non représenté) de façon étanche sur cette surface portante 4.

Cette surface portante 4 est traversée par trois lumières 6 à 8, à savoir deux lumières d'alimentation 6 et 7, et une lumière d'évacuation 8. Les lumières d'alimentation 6 et 7, sont raccordées, à l'opposé de la surface portante, à deux conduits 9 et 10 d'arrivée d'eau chaude et d'eau froide, tandis que la lumière d'évacuation 8 est raccordée à un conduit 11 d'évacuation d'eau à température intermédiaire. On observera que les lumières 6 à 8 s'évasent à partir des conduits en direction du disque mobile.

Ces lumières d'alimentation 6 et 7 sont situées de part et d'autre d'un plan de référence repéré P, perpendiculaire au disque fixe 1 et coupant la lumière d'évacuation 8. Ce plan P constitue ici un plan de symétrie pour le disque fixe.

Le disque mobile 2 comporte quant à lui un évidement oblong 12 qui le traverse ici sur une partie seulement de son épaisseur (c'est donc un trou borgne).

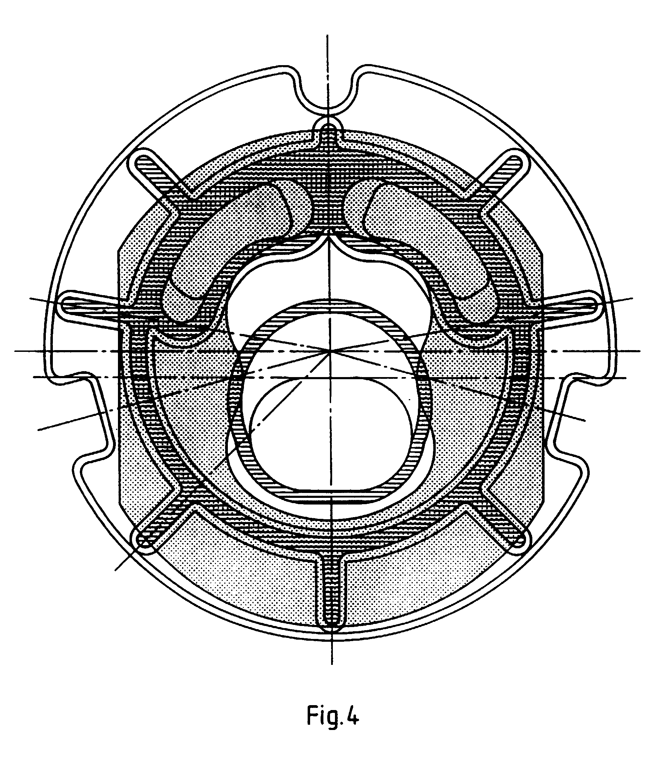

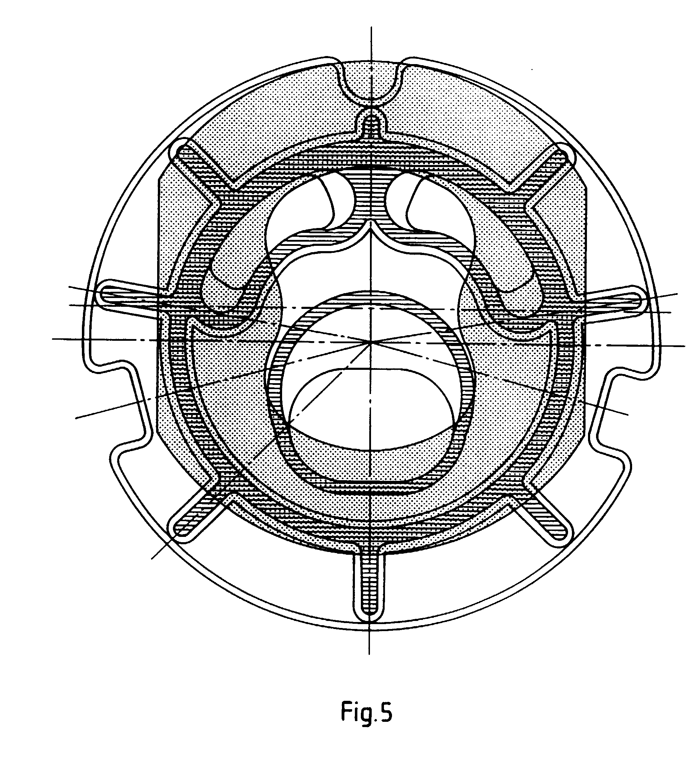

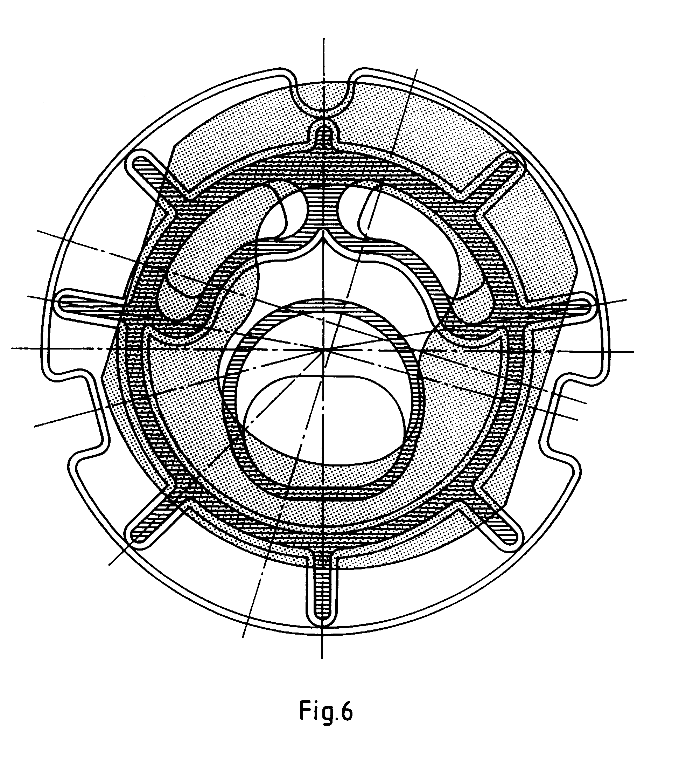

Ce disque mobile est commandé en mouvement par un mécanisme (non représenté) attelé à un levier de manoeuvre (également non représenté) extérieur au robinet entre une position dite fermée (voir la figure 4) où l'évidement oblong 12 n'intercepte que la lumière d'évacuation du disque fixe, et diverses positions d'ouverture, soit symétriques par rapport au plan P (voir figure 5) auquel des débits d'eaux froide et chaude se mélangent en parts égales, soit dissymétriques par rapport à ce plan (voir la figure 6 à titre d'exemple) où l'un des débits (ici le débit provenant de la lumière 7) est prépondérant.

Les disques 1 et 2 sont ici globalement circulaires. avec toutefois des encoches 15 ou des méplats 16 pour leur positionnement angulaire vis à vis de la cartouche (disque fixe) ou vis à vis du mécanisme de cartouche (disque mobile).

La surface portante 4 du disque fixe est, selon l'invention, non continue, alors que la surface d'appui 5 s'étend continûment depuis l'évidement 12 jusqu'au bord périphérique 17 du disque mobile.

Cette surface portante comporte tout d'abord un liseré principal 20 fermé sur lui-même, s'étendant tout autour des trois lumières, et tel qu'en toute position du disque mobile la surface d'appui soit en appui sur ce liseré tout autour de ces trois lumières 6 à 8.

Cette surface portante 4 comporte en outre un liseré interne adapté, en position fermée (cf. Figure 4) du disque mobile, à isoler les lumières d'alimentation 6 et 7 vis à vis de l'évidement oblong 12 et donc de la lumière d'évacuation 8. Ce liseré interne est avantageusement constitué de deux liserés 21 et 22, isolés l'un de l'autre ou au contraire contigüs, qui entourent chacun l'une ou l'autre des lumières d'alimentation 6 et 7, en sorte de les isoler dans ladite position fermée du disque mobile.

Dans l'exemple représenté les deux liserés 21 et 22 sont contigüs l'un à l'autre et sont eux-mêmes contigüs au liseré principal 20.

En variante non représentée, ces liserés sont isolés l'un vis à vis de l'autre et vis à vis du liseré principal 20.

Dans une autre variante non représentée, le liseré interne se réduit à un liseré unique entourant les deux lumières 6 et 7, soit à lui seul, soit conjointement avec le liseré principal.

A l'intérieur de ce liseré principal 20 et à l'opposé des lumières 6 et 7 par rapport à ce liseré interne, est prévue une dépression 23 ce faible profondeur h, de profondeur comprise entre 0,3 et 1,5 mm, de préférence entre 0,6 et 1 mm, de préférence au plus égale à 25 % de l'épaisseur du disque fixe de manière à ne pas en altérer les propriétés mécaniques ( cette limite supérieure est aussi imposée par la faisabilité industrielle d'un tel disque).

La surface portante 4 comporte en outre un liseré 24 entourant la lumière d'évacuation 8 en sorte de former un rebord pour la dépression 23 qui peut ainsi constituer une réserve d'eau en position fermée (les disques sont généralement horizontaux). Dans l'exemple représenté, ce liseré 24 est isolé vis à vis du liseré principal 20.

Les liserés. en particulier le liseré principal. ont de préférence une largeur valant entre 2 et 15 % du diamètre du disque fixe, en pratique au moins égale à 0,6 mm, de préférence au moins égale à 0.75 mm.

La dépression 23 est ici d'un seul tenant, c'est-à-dire unique : elle peut, bien sûr, en variante non représentée, être formée de plusieurs parties, formant autant de réserves d'eau indépendantes.

Pour renforcer l'appui du disque mobile, la surface portante comporte avantageusement des nervures radiales 30.

Les divers liserés et ces nervures sont avantageusement bordés par des rebords 31 de profondeur intermédiaire.

Pour être efficace, la dépression doit être de grande surface et est dimensionnée en appliquant les principes suivants :

- soit D le diamètre du disque fixe
- soit d le diamètre du disque mobile.
- soit $d_1$ le diamètre du cercle minimum contenant les trois lumières de passage d'eau.

Le diamètre interne de la surface portante doit être compris entre :

$$\varnothing < 2d - D$$

$\varnothing \geqq d_1$ (dans la zone des arrivées d'eau)

Dans la pratique, on choisit $\varnothing$ environ égal à $d_1$ + 1,5 mm (il est clair que. pour que ce principe fonctionne il faut que $d_1 < 2d - D$). Cependant, au cas par cas, le fait de mettre des évidements remplis d'eau entre les deux disques reste dans le cadre de l'invention.

La condition précédente étant satisfaite, le pourtour de la dépression est obtenu en créant le liseré 20 de surface portante autour du périmètre des passages d'eau. Ce liseré peut avoir une largeur d'environ 0,6 à 1 mm.

Il est bien entendu nécessaire de procéder au raccordement des formes ou contours des lumières de façon à ce que, dans les zones non contiguës des lumières, la dépression soit limitée par des portions de cercle concentriques avec le cercle extérieur de la surface portante (cercle ou plus simplement périmètre).

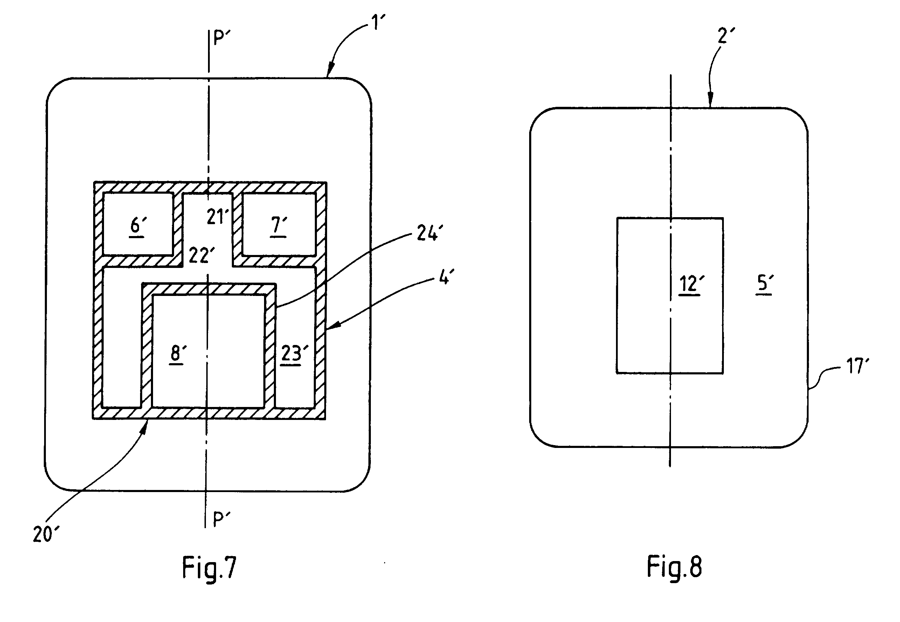

Les figures 7 et 8 représentent de façon très schématique une variante'de réalisation dans laquelle les disques, au lieu d'être circulaires, sont rectangulaires.

Les éléments analogues à ceux des figures 1 à 6 portent les mêmes chiffres de référence, mais affectés de l'indice "prime".

Il va de soi que la description qui précède n'a été proposée qu'à titre d'exemple non limitatif et que de nombreuses variantes peuvent être proposées par l'homme de l'art.

## Revendications

1.  Couple de disques céramiques pour robinet mitigeur, comportant un disque fixe (1, 1') destiné à être fixe par rapport à ce robinet, et un disque mobile (2, 2') de plus petite taille que le disque fixe et destiné à glisser sur ce disque fixe en translation et en rotation à l'intérieur d'un débattement donné, ce disque fixe comportant sur une face une surface portante (4, 4') destinée à être affrontée au disque mobile et étant traversé par deux lumières d'alimentation (6, 7, 6', 7') et par une lumière d'évacuation (8. 8') d'eau, destinées à être raccordées à l'opposé de la surface portante à deux conduits d'arrivée d'eau chaude et froide (9, 10), et à un conduit (11) de sortie d'eau à température intermédiaire, ces lumières d'alimentation étant situées de part et d'autre d'un plan de référence (P, P') perpendiculaire à ce disque fixe et traversant la lumière d'évacuation, ce disque mobile comportant une surface d'appui (5, 5') adaptée à être pressée de façon étanche sur la surface portante du disque fixe, dans cette surface d'appui débouchant un évidement oblong (12, 12') adapté, selon la position du disque mobile le long du disque fixe, à n'intercepter que la lumière d'évacuation en une position dite fermée ou à intercepter cette lumière d'évacuation et l'une et/ou l'autre, au moins partiellement, des lumières d'alimentation, cette surface d'appui du disque mobile étant continue depuis ledit évidement jusqu'à un bord périphérique (17, 17') de ce disque mobile, la surface portante du disque fixe comportant un liseré principal (20, 20') fermé s'étendant autour des trois lumières et d'au moins une dépression (23, 23') ménagée dans ladite face sur une partie seulement de l'épaisseur de ce disque fixe, la surface d'appui du disque mobile venant, en toute position relative vis à vis du disque fixe, en appui sur ce liseré (20. 20') tout autour de cette dépression, cette surface portante (4. 4') comportant en outre un liseré interne (21, 22, 21', 22') isolant, en position fermée du disque mobile la lumière d'évacuation (8, 8') vis à vis des lumières d'alimentation (6, 7, 6', 7'), caractérisé en ce que la surface portante du disque fixe comporte en outre un liseré interne secondaire (24, 24') entourant la lumière d'évacuation.

2. Couple de disques céramiques selon la revendication 1, caractérisé en ce que ce liseré interne secondaire est isolé vis à vis du liseré principal.

3. Couple de disques céramiques selon la revendication 1 ou la revendication 2, caractérisé en ce que ce liseré interne s'étend autour de chaque lumière d'alimentation (6, 7, 6', 7').

4. Couple de disques céramiques selon la revendication 2 ou la revendication 3, caractérisé en ce que ce liseré interne est contigü au liseré principal.

5. Couple de disques céramiques selon l'une quelconque des revendications 1 à 4, caractérisé en ce que le bord périphérique (17) de la surface d'appui du disque mobile est inscrit dans un cercle de diamètre $\underline{d}$, le débattement du disque mobile le long du disque fixe est au moins approximativement une surface de diamètre $\underline{D}$, et le liseré principal (20) est circulaire, avec un diamètre interne Ø satisfaisant les inégalités :

$$d_1 \leqq \emptyset < 2\,d - D$$

où $d_1$ est le diamètre du plus petit cercle contenant les trois lumières d'alimentation et d'évacuation.

6. Couple de disques céramiques selon la revendication 5, caractérisé en ce que le diamètre $\underline{D}$ est le diamètre du disque fixe (1).

7. Couple de disques céramiques selon la revendication 5 ou la revendication 6, caractérisé en ce que le liseré principal a un diamètre valant au moins ($d_1$ + 1,5 mm).

8. Couple de disques céramiques selon l'une quelconque des revendications 1 à 7, caractérisé en ce que le liseré principal (20, 20') a une largeur valant entre 2 et 15 % de la longueur moyenne du disque fixe.

9. Couple de disques céramiques selon la revendication 8, caractérisé en ce que ce liseré principal (20, 20') a une largeur d'au moins 0,6 mm, de préférence au moins 0,75 mm.

10. Couple de disques céramiques selon l'une quelconque des revendications 1 à 9. caractérisé en ce que cette surface portante comporte en outre des nervures (30) en saillie latéralement vers l'extérieur du liseré principal.

11. Couple de disques céramiques selon l'une quelconque des revendications 1 à 10. caractérisé en ce que cette dépression (23, 23') ménagée dans le disque fixe est unique.

12. Couple de disques céramiques selon l'une quelconque des revendications 1 à 11, caractérisé en ce que cette dépression a une profondeur comprise entre 0,3 et 1,5 mm, et au plus égale à 25 % de l'épaisseur de ce disque fixe.

13. Couple de disques céramiques selon l'une quelconque des revendications 1 à 12, caractérisé en ce que ledit plan de symétrie constitue un plan de symétrie pour le disque fixe.

14. Couple de disques céramiques selon l'une quelconque des revendications 1 à 13, caractérisé en ce que l'évidement ménagé dans le disque mobile le traverse sur une partie seulement de son épaisseur.

**Patentansprüche**

1. Keramikscheibenpaar für einen Mischhahn, mit einer in bezug auf diesen Hahn feststehenden Scheibe (1, 1') und mit einer beweglichen Scheibe (2, 2'), die eine kleinere Größe als die feststehende Scheibe aufweist und dazu bestimmt ist, auf der feststehenden Scheibe mit translatorischen und drehenden Bewegungen innerhalb einer vorgegebenen Auslenkung zu gleiten, wobei die feststehende Scheibe auf einer Seite eine Auflagefläche (4, 4') aufweist, die zum Anlegen an die bewegliche Scheibe dient und von zwei Speiseöffnungen (6, 7, 6', 7') sowie von einer Ablauföffnung (8, 8') für Wasser durchsetzt wird, und diese Öffnungen gegenüber der Auflagefläche an zwei Zuführungsleitungen (9, 10) für warmes und kaltes Wasser und an eine Auslaßleitung (11) für Wasser mit einer Zwischentemperatur anschließbar sind, und wobei diese Speiseöffnungen beidseits einer Bezugsebene (P, P') liegen, die senkrecht zur feststehenden Scheibe und durch die Ablauföffnung hindurch verläuft, und die bewegliche Scheibe eine Lagerfläche (5, 5') aufweist, die dichtend gegen die Auflagefläche der feststehenden Scheibe andrückbar ist und in die eine längliche Aussparung (12, 12') mündet, die entsprechend der Längsstellung der beweglichen Scheibe auf der feststehenden Scheibe nur die Ablauföffnung in einer als geschlossen bezeichneten Stellung oder diese Ablauföffnung und zumindest teilweise die eine und/oder die andere der Speiseöffnungen überdeckt, wobei die Lagerfläche der beweglichen Scheibe von der Aussparung bis zu einem Umfangsrand (17, 17') dieser beweglichen Scheibe verläuft und die Auflagefläche der feststehenden Scheibe einen geschlossenen Hauptrandstreifen (20, 20') aufweist, der um die drei Öffnungen herum verläuft und wenigstens eine Vertiefung (23, 23') umschließt, die in besagter Fläche nur über einen Teil der Dicke dieser feststehenden Scheibe ausgespart ist, wobei die Lagerfläche der beweglichen Scheibe in jeder Relativstellung zur feststehenden Scheibe auf dem Randstreifen (20, 20') ganz um diese Vertiefung herum aufliegt und die Auflagefläche (4, 4') ferner einen inneren Randstreifen (21, 22, 21', 22') aufweist, der in Schließstellung der beweglichen Scheibe die Ablauföffnung (8, 8') von den Speiseöffnungen (6, 7, 6', 7') trennt, **dadurch gekennzeichnet**, daß die Auflagefläche der feststehenden Scheibe ferner einen zweiten inneren Randstreifen (24, 24') aufweist, der die Ablauföffnung umschließt.

2. Keramikscheibenpaar nach Anspruch 1, dadurch gekennzeichnet, daß dieser zweite innere Randstreifen vom Hauptrandstreifen getrennt ist.

3. Keramikscheibenpaar nach Anspruch 1 oder Anspruch 2, dadurch gekennzeichnet, daß der innere Randstreifen um jede Speiseöffnung (6, 7, 6', 7') herum verläuft.

4. Keramikscheibenpaar nach Anspruch 2 oder Anspruch 3, dadurch gekennzeichnet, daß der innere Randstreifen dem Hauptrandstreifen benachbart ist.

5. Keramikscheibenpaar nach einem der Ansprüche 1 bis 4, dadurch gekennzeichnet, daß der Umfangsrand (17) der Lagerfläche der beweglichen Scheibe in einen Kreis eines Durchmessers d einbeschrieben ist, wobei die Bewegbarkeit der beweglichen Scheibe längs der feststehenden Scheibe zumindest ungefähr einer Fläche mit einem Durchmesser $\underline{D}$ entspricht und der Hauptrandstreifen (20) kreisförmig mit einem Innendurchmesser $\varnothing$ ausgebildet ist, der die Ungleichungen

$$d_1 \leq \varnothing < 2d - D$$

erfüllt, worin $d_1$ den Durchmesser des kleinsten Kreises darstellt, der die drei Speise- und Ablauföffnungen einschließt.

6. Keramikscheibenpaar nach Anspruch 5, dadurch gekennzeichnet, daß der Durchmesser $\underline{D}$ der Durchmesser der feststehenden Scheibe (1) ist.

7. Keramikscheibenpaar nach Anspruch 5 oder Anspruch 6, dadurch gekennzeichnet, daß der Hauptrandstreifen einen Durchmesser von wenigstens $(d_1 + 1,5\ mm)$ aufweist.

8. Keramikscheibenpaar nach einem der Ansprüche 1 bis 7, dadurch gekennzeichnet, daß der Hauptrandstreifen (20, 20') eine Breite von 2 % bis 15 % der mittleren Länge der feststehenden Scheibe aufweist.

9. Keramikscheibenpaar nach Anspruch 8, dadurch gekennzeichnet, daß der Hauptrandstreifen (20, 20') eine Breite von wenigstens 0,6 mm, bevorzugt wenigstens 0,75 mm, aufweist.

10. Keramikscheibenpaar nach einem der Ansprüche 1 bis 9, dadurch gekennzeichnet, daß die Auflagefläche noch vom Hauptrandstreifen seitlich nach außen vorspringende Rippen (30) aufweist.

11. Keramikscheibenpaar nach einem der Ansprüche 1 bis 10, dadurch gekennzeichnet, daß die in der feststehenden Scheibe ausgebildete Vertiefung (23, 23') einteilig ausgebildet ist.

12. Keramikscheibenpaar nach einem der Ansprüche 1 bis 11, dadurch gekennzeichnet, daß die Vertiefung eine Tiefe von 0,3 bis 1,5 mm und von höchstens 25 % der Dicke der feststehenden Scheibe aufweist.

13. Keramikscheibenpaar nach einem der Ansprüche 1 bis 12, dadurch gekennzeichnet, daß die Symmetrieebene eine Symmetrieebene für die feststehende Scheibe darstellt.

14. Keramikscheibenpaar nach einem der Ansprüche 1 bis 13, dadurch gekennzeichnet, daß die in der beweglichen Scheibe ausgebildete Aussparung diese nur über einen Teil ihrer Dicke durchsetzt.

**Claims**

1. Pair of ceramic discs for a mixer tap, including a fixed disc (1, 1') intended to be fixed with respect to this tap, and a movable disc (2, 2'), smaller in size than the fixed disc and intended to slide on this fixed disc in translational motion and in rotation within a given range of movement, this fixed disc having on one face a bearing surface (4, 4') intended to fit face to face with the movable disc and having pass through it two water feed slots (6, 7, 6', 7') and a water discharge slot (8, 8'), intended to be connected opposite the bearing surface to two hot and cold water inlet pipes (9, 10), and to an outlet pipe (11) for water at intermediate temperature, these feed slots being situated on each side of a reference plane (P, P') perpendicular to this fixed disc and passing through the discharge slot, this movable disc having a support surface (5, 5') adapted for being pressed sealingly against the bearing surface of the fixed disc, an oblong recess (12, 12') opening out in this support surface, adapted, depending on the position of the movable disc along the fixed disc, so as to intercept only the discharge slot in a so-called closed position or to intercept this discharge slot and one or other or both, at least partially, of the feed slots, this support surface of the movable disc being continuous from the said recess as far as a peripheral edge (17, 17') of this movable disc, the bearing surface of the fixed disc having a main closed rim (20, 20') extending around the three slots and of at least one hollow (23, 23') provided in the said face over only one part of the thickness of this fixed disc, the support surface of the movable disc coming, in any relative position vis-a-vis the fixed disc, to bear on this rim (20, 20') all around this hollow, this bearing surface (4, 4') also having an inner rim (21, 22, 21', 22') isolating, in the closed position of the movable disc, the discharge slot (8, 8') vis-a-vis the feed slots (6, 7, 6', 7'), characterised in that the bearing surface of the fixed disc also has a secondary inner rim (24, 24') surrounding the discharge slot.

2. Pair of ceramic discs according to claim 1, characterised in that this secondary inner rim is isolated vis-a-vis the main rim.

3. Pair of ceramic discs according to claim 1 or claim 2, characterised in that this inner rim extends around each feed slot (6, 7, 6', 7').

4. Pair of ceramic discs according to claim 2 or claim 3, characterised in that this inner rim is contiguous with the main rim.

5. Pair of ceramic discs according to any one of claims 1 to 4, characterised in that the peripheral edge (17) of the support surface of the movable disc fits within a circle of diameter $\underline{d}$, the range of movement of the movable disc along the fixed disc is at least approximately a surface of diameter $\underline{D}$ and the principal rim (20) is circular, with an internal diameter $\varnothing$ satisfying the inequations :

$$d_1 \leq \varnothing < 2\,d - D$$

where $d_1$ is the diameter of the smallest circle containing the three feed and discharge slots.

6. Pair of ceramic discs according to claim 5, characterised in that the diameter $\underline{D}$ is the diameter of the fixed disc (1).

7. Pair of ceramic discs according to claim 5 or claim 6, characterised in that the principal rim has a diameter equal to at least ($d_1$ + 1.5 mm).

8. Pair of ceramic discs according to any one of claims 1 to 7, characterised in that the principal rim (20, 20') has a width equal to between 2 and 15 % of the mean length of the fixed disc.

9. Pair of ceramic discs according to claim 8, characterised in that this principal rim (20, 20') has a width of at least 0.6 mm, preferably at least 0.75 mm.

10. Pair of ceramic discs according to any one of claims 1 to 9, characterised in that this bearing surface also includes ribs (30) projecting laterally towards the outside of the principal rim.

11. Pair of ceramic discs according to any one of claims 1 to 10, characterised in that this hollow (23, 23') provided in the fixed disc is the only one.

12. Pair of ceramic discs according to any one of claims 1 to 11, characterised in that this hollow has a depth of between 0.3 and 1.5 mm and at most equal to 25 % of the thickness of this fixed disc.

13. Pair of ceramic discs according to any one of claims 1 to 12, characterised in that the said symmetry plane constitutes a symmetry plane for the fixed disc.

14. Pair of ceramic discs according to any one of claims 1 to 13, characterised in that the recess provided in the movable disc passes through it over only a part of its thickness.

Fig.1

Fig.3

Fig.2

Fig.4

Fig. 5

Fig.6

Fig.8

Fig.7